# EUROPEAN PATENT APPLICATION

(11) **EP 4 749 346 A2**
(43) Date of publication of application: **27.05.2026**
(21) Application number: 26169829.4
(22) Date of filing: 01.11.2021
(51) Int. Cl.: G02B 26/10

(54) **OPTICAL DEVICE AND LASER MACHINING DEVICE**

(30) Priority: 30.10.2020 DE 102020128694; 31.03.2021 WO PCT/IB2021/052711; 28.07.2021 WO PCT/IB2021/056875
(62) Divisional of application: 21205800.2
(71) Applicant: Optotune Switzerland AG, 8953 Dietikon (CH)
(72) Inventor: ASCHWANDEN, Manuel, 8953 Dietikon (CH); ZESCH, Wolfgang, 8953 Dietikon (CH)
(74) Representative: Schulz Junghans Patentanwälte PartGmbB

(57) **Abstract**

Optical device (1) comprising a carrier (4), an optical element (2) and a radiation sink (3), wherein the optical element (2) is mounted on the carrier (4), the optical element (2) is movably attached to the carrier (4), the carrier (4) has a recess (7), wherein the optical device (1) is arranged to interact with electromagnetic radiation (9), dividing the electromagnetic radiation (9) in a first portion (91) and a second portion (92), the optical element is arranged to deflect the first portion in a definable direction, and the second portion (92) is incident into the recess (7) and impinges onto the radiation sink (3).

## Description

An optical device is arranged to interact with electromagnetic radiation of a dedicated wavelength range in a predetermined manner by means of reflection, diffraction, or refraction. In particular, the optical device is arranged to deflect a laser beam in a predetermined manner by means of reflection.

According to an embodiment the optical device comprises a carrier, an optical element and a radiation sink. For example, in operation the electromagnetic radiation impinges onto the optical element in a predetermined manner. The optical element may be mirror, which is arranged to reflect electromagnetic radiation of a dedicated wavelength range. In particular, the mirror has a reflectivity for light of the dedicated wavelength range of at least 99% in particular at least 99.9%. In particular, the mirror is a dielectric mirror. Preferably the dielectric mirror does not absorb the second portion but transmit the second portion. Advantageously, the second portion does not heat, and thereby damage, the mirror. Thus, the dielectric mirror is preferable over a metal mirror because the excess heat resulting from the second portion may be dissipated at a different location than the mirror.

The optical element is mounted on the carrier. For example, the optical element is movably attached to the carrier. The optical element may be attached to the carrier by means of a hinge and/or a spring. For example, the optical element is attached to the carrier by means of bending beams. In particular, the optical element is rotatable around a first rotational axis and a second rotational axis with respect to the carrier. The first rotational axis and the second rotational axis extend obliquely, in particular perpendicularly, with respect to each other. The first and/or second rotational axis may be imaginary straight lines, which help to describe motions of the optical element with respect to the carrier. For example, the first rotational axis and the second rotational axis extend in the optical element or along a surface, preferably a reflective surface, of the optical element.

The carrier may comprise a printed circuit board, in particular consist of a printed circuit board. For example, the carrier comprises an actuator or a part of an actuator, which is arranged to apply a force to the optical element. For example, the actuator or the part of the actuator may be a coil or a magnet. The coil may be integrated in the layer structure of the printed circuit board. The actuator may be arranged to apply a between the optical element and the carrier, which causes translation of the optical element along its main extension plane, a translation perpendicular to its main extension plane and/or a rotation around the first or second rotational axes.

According to an embodiment, the carrier has a recess. The recess may be a blind hole or a recess extending completely through the carrier in one direction. In particular, there is one sectional plane through the carrier, wherein the recess is completely surrounded by the carrier along said plane. In other words, the carrier has a frame-like structure around the recess.

According to an embodiment, the optical device is arranged to interact with electromagnetic radiation, dividing the electromagnetic radiation in a first portion and a second portion. The optical element is arranged to deflect the first portion in a definable direction. The second portion is incident into the recess and impinges onto the radiation sink. For example, the radiation sink is arranged in the recess. Alternatively, in case the recess extends completely through the carrier, the radiation sink may be placed outside the recess along the optical path of the light transmitted through the optical element. For example, the optical element and the radiation sink are arranged on opposing sides of the carrier. The radiation sink may have a particularly small reflectivity and a small transparency for the electromagnetic radiation. In particular, the radiation sink has a black surface onto which the light impinges. Furthermore, the reflectivity of the radiation sink may be reduced by means of a roughened surface. The radiation sink may comprise a material having a particularly high thermal conductivity. For example, the radiation sink comprises a metal. The radiation sink may comprise a liquid unit, which is arranged to reduce the temperature of the radiation sink by means of a cooling liquid. In particular, the radiation sink may comprise channels, through which the liquid unit pumps a cooling liquid. The radiation sink may comprise cooling fins, which are arranged to increase the surface of the radiation sink, to increase heat exchange with the surrounding atmosphere. Moreover, the radiation sink may comprise heat pipes, which are arranged to conduct heat away from the carrier and/or the optical element.

According to an embodiment, the optical device comprises the carrier, the optical element and the radiation sink. The optical element is mounted on the carrier and the optical element is movable with respect to the carrier. The first rotational axis and the second rotational axis extend obliquely with respect to each other. The carrier has a recess, wherein light which is transmitted through the optical element impinges onto the radiation sink. In particular, the light which is transmitted through the optical element is incident into the recess.

The optical device described here is based on the following considerations, among others. The temperature of the carrier, the optical element, and the temperature of the mechanical connection between the carrier and the optical element has a major impact on the relative motion of the optical element and on the optical properties of the optical element. Thus, it is desirable to maintain the temperature of the carrier and the optical element constant during operation. In particular, it is beneficial to avoid heat input through the absorption of light in the carrier or in the optical element.

The optical device described here makes use of the idea, that electromagnetic radiation which does not interact with the optical element in the intended manner is absorbed by the radiation sink. As a result, the effect of electromagnetic radiation on the temperature of the carrier, optical element and the mechanical connection between the carrier and the optical element is reduced. Advantageously, the optical and mechanical properties of the optical device are particularly stable, which results in a particularly high precision and reliability of the optical device.

According to one embodiment, the electromagnetic radiation and the first portion and/or the second portion is/are incident into the recess.

According to one embodiment, the recess extends completely through the carrier from a first side of the carrier to a second side of the carrier, wherein the first side is opposed to the second side. For example, the optical element is arranged on the first side of the carrier and the radiation sink is arranged on the second side of the carrier. For example, in a lateral direction the radiation sink protrudes over the recess. Here and in the following, the lateral direction is a direction along the main extension direction of the carrier. Advantageously, in the lateral direction the size of the radiation sink is not limited by the size of the recess. Thus, the radiation sink may be particularly large, which allows to absorb particularly large amounts of heat by means of the radiation sink essentially without affecting the temperature of the carrier and/or optical element.

According to one embodiment, the carrier and the radiation sink are connected by a thermally insulating material. For example, the radiation sink is mechanically coupled to the carrier by means of the thermally insulating material. Thus, the carrier and the radiation sink are connected indirectly. In particular, there is no direct contact between the radiation sink and the carrier. The radiation sink comprises a material having a larger thermal conductivity than the thermally insulating material. In particular, the radiation sink comprises or consist of a material, for example a metal, having a thermal conductivity of at least 10 W/(mK), preferably at least 100 W/(mK). The thermally insulating material comprises or consists of a material, for example a polymer or a ceramic, having a thermal conductivity of at most 5 W/(mK), preferably at most 1 W/(mK). There may be a gap between the carrier and the radiation sink, wherein the gap is filled with a gas. Said gas may have a particularly low pressure of at most 10⁻³ hPa. Advantageously, the thermally insulating material reduces the amount of heat transferred from the radiation sink to the carrier.

According to one embodiment, the optical element is a mirror. In particular the mirror is a distributed Bragg reflector (DBR) or a dichroic mirror. The mirror may have a particularly high reflectivity for electromagnetic radiation of a laser beam, which is utilized for machining of materials. In particular, the mirror comprises a silica glass substrate having a DBR or a silver layer on one surface, wherein the DBR or the silver layer provides a reflective surface of the mirror. For example, the mirror is free of means for liquid cooling or air cooling. In particular, the mirror is free of cooling fins, which serve the purpose of increasing the mirrors surface for simplified heat exchange.

According to one embodiment, the mirror is fixedly attached to a chassis which is arranged to move with the mirror, wherein the mirror and the chassis form a movable portion of the optical device, which moves with respect to a fixed portion of the optical device, and a distance between a center of gravity of the movable portion and the first rotational axis is not more than 0.5 mm and a distance between a center of gravity of the movable portion and the second rotational axis is not more than 0.5 mm. The fixed portion of the optical device comprises the carrier. In particular, the fixed portion comprises all parts of the optical device, which are not moved with respect to the carrier. The first rotational axis and the second rotational axis may extend along the reflective surface of the mirror. Preferably, the first and second rotational axes extend in a plane defined by the reflective surface. For example, the mirror has a particularly low mass. The mirror may have a mass of at most 20 grams. The mass of the mirror may be distributed evenly along the entire reflective surface of the mirror. For example, the mirror has a constant thickness in a direction perpendicular to the reflective surface. Alternatively, in regions closer to first rotational axis and/or the second rotational axis the mirror has a larger thickness in a direction perpendicular to the reflective surface of the mirror, than in regions further away from the first rotational axis and/or the second rotational axis.

In particular, the first rotational axis and/or the second rotational axis are imaginary axes. Here and in the following, an imaginary axis of rotation describes an axis around which the movable part rotates during the intended operation, whereby a load-bearing structure that guides the rotation does not necessarily extend along the rotational axis. The imaginary axis of rotation extends along an imaginary straight line without a structure guiding the rotation necessarily running along this straight line.

The mirror may have a quadratic shape seen in a top view, wherein the mirror has an edge with a length of 20 mm, preferably at least 40 mm. the mirror may have thickness from 1 mm to 6 mm, preferably 3.5 mm to 4.5 mm.

The mirror may comprise connecting points, at which a mechanical connection between the optical element and the carrier is provided. The connecting points are arranged at an edge region of the mirror, wherein the edge region connects the reflective surface and a backside which is opposed to the reflective surface.

According to one embodiment, the optical device comprises a bearing which is arranged to bear the movable portion on the carrier, wherein the bearing comprises at least two bending beams. Here and in the following, the bending beam (also known as flexure) comprises a slender structural element, which in its intentional use is subjected to an external load perpendicularly to a longitudinal axis of the element. The bending beam is assumed to be such that a length is considerably longer than a width and a thickness. For example, the width and the thickness are a small fraction, typically 1/10 or less, of the length, wherein the longitudinal axis extends along the length.

In particular, the movable portion is solely beared by means of bending beams. The longitudinal axis of the bending beam may extend along a reflective surface of the optical element.

According to one embodiment, the actuator is arranged to generate forces which effect the rotation around the first axis of rotation and the rotation around the second axis of rotation independently of one another. In particular, the actuator comprises at least two actuator portions, wherein each portion comprises a magnet and a coil. For each actuator portion, the coil is fixedly attached to the carrier and the magnet is fixedly attached to the movable portion or vice versa. One of the at least two actuator portions is arranged to generate a force which effects the rotation around the first axis and the other of the at least two actuator portions is arranged to generate a force which effects the rotation around the second axis.

According to one embodiment, for the actuator portions, the coil is fixedly attached to the carrier and the magnet is fixedly attached to the movable portion. In particular, the carrier acts as a heat sink for the coil. For example, the carrier is connected to the radiation sink, which is exposed to the heat emerging from the second beam portion and the heat emerging from the coil due to their operating current. In particular, the radiation sink may comprise a liquid cooling system, which is arranged to cool the radiation sink. In particular, the thermal resistance between the coil and the movable portion is higher than the thermal resistance between the coil and the carrier. Preferably, the thermal resistance between the coil and the movable portion is higher than the thermal resistance between the coil and the radiation sink.

According to one embodiment, an airstream passes by the movable portion. For example, the air stream is arranged to pass by the movable portion from the first side towards the second side. Alternatively, the air stream passes by the movable portion on the second side, wherein the air stream does not pass by the first side. In particular, the air stream is arranged to cool the movable portion. Advantageously, said directions of the air stream reduce the risk of particles being transferred from the first side, for example originating from the bearing or the actuator, to the second side. Thus, the air stream may serve multiple purposes by cooling the movable portion and maintaining the particle exposure of the optical element low.

In particular, the moving portion comprises a sensor which is arranged to measure the temperature of the moving portion. Preferably the sensor is electrically connected by means of the bearing.

According to one embodiment, one of the coils is fixedly attached to the movable portion, and the bending beams comprise electrical contacts of the coil. In particular, multiple coils are fixedly attached to the movable portion, and the bearing comprises the electrical contacts of the multiple coils. For example, the bending beams are formed from an electrically conductive material.

According to one embodiment, the optical element has a first resonance frequency for rotation around the first rotational axis and a second resonance frequency for rotation around the second rotational axis. The first resonance frequency differs from the second resonance frequency by maximum 50 Hz, preferably 5 Hz. For example, the first resonance frequency is at least 100 Hz, preferably at least 1kHz. The second resonance frequency may be at least 100 Hz, preferably at least 1 kHz. The first and second resonance frequency are essentially defined by the mass of the optical element, the mass distribution of the optical element around the first and/or second rotation axis and by the mechanical connection between the carrier and the optical element. For example, the optical element is connected to the carrier by means of springs. The springs may be bending beams or torsional beams.

According to one embodiment the optical element has a first amplitude for a rotation around the first rotational axis and a second amplitude for a rotation around the second rotational axis. In particular, the first amplitude and the second amplitude differ at most by 0.1°, in particular at most by 0.05°.

According to one embodiment, the first amplitude and/or the second amplitude may be at least ±0.05°, preferably at least ±0.1°, highly preferred at least ±1°. The first amplitude and the second amplitude correspond to the maximum deflection when the optical element is deflected around the first rotational axis or the second rotational axis at its respective resonance frequency.

The optical device may be arranged, to move the optical element with respect to the carrier in a wobbling motion. In particular, the rotation around the first rotational axis has a 90° phase shift with respect to the rotation around the second rotational axis.

According to one embodiment, the optical device comprises a measurement unit which is arranged to measure the deflection of the optical element. The measurement unit is arranged to measure rotation of the optical element around the first rotational axis and rotation around the second rotational axis. In particular, the measurement unit is coupled to the actuator, and the optical device is arranged to operate in a closed loop mode.

According to one embodiment, the measurement unit is arranged to generate a measurement beam which impinges on the movable portion. The measurement beam may be a laser beam, which has a different peak wavelength than the electromagnetic radiation which is divided into the first and second portion.

The movable portion is arranged to reflect the measurement beam. The measurement beam may be reflected at a reflective surface of the optical element. In particular, the reflective surface may be formed by means of a dielectric mirror, wherein said dielectric mirror may have a particularly high reflectivity for the wavelength range of the measurement beam. For example, said reflective surface is arranged on a side which is opposed to a side of the optical element, at which the electromagnetic radiation which is divided into the first and second portion impinges.

The measurement beam impinges on a side of the optical element which is opposed to the side on which the beam impinges during intended operation. In other words, the optical element comprises a first dielectric mirror on a first surface and a second dielectric mirror on a second surface. This first and the second dielectric mirror have a peak wavelength respectively, wherein the peak wavelengths are the wavelengths at which the first and second dielectric mirror have a particularly high reflectivity. The peak wavelengths differ by at least 10 nm, preferably by at least 50 nm. In particular, the second dielectric mirror, which has a high reflectivity for the measurement beam than for the electromagnetic radiation which is divided into the first and second portion. For example, the second dielectric mirror has a reflectivity of at most 50%, preferably at most 10%, highly preferred at most 1% for the electromagnetic radiation, which is divided into the first and second portion.

The measurement unit comprises a detector, wherein the detector is arranged to detect the reflected measurement beam. The detector may comprise position sensitive diodes, which are arranged to detect a location of the reflected measurement beam. A location at which the reflected measurement beam impinges on the detector depends on the deflection of the optical element. The measurement unit is arranged to determine the deflection of the optical element from the detected location.

According to one embodiment the optical device is arranged to deflect a laser beam having an optical power of at least 0.5kW, in particular at least 10 kW. In particular, the optical device is arranged to deflect the laser beam by reflection in a definable direction. For example, the optical element comprises a mirror which is arranged to deflect the laser beam. The mirror has a reflectivity of at least 97%, preferably at least 98%, highly preferred at least 99%, for the light of the laser beam.

A laser machining device comprising an optical device is also given. In particular, a laser machining device described here may comprise the optical device described in here. Thus, all features disclosed for the optical device are also disclosed for the laser machining device and vice versa.

According to one embodiment the laser machining device comprises the optical device and a laser source. The laser source is arranged to emit a laser beam having an energy of at least 0.5 KW. The optical device, in particular the optical element, is arranged to interact with the laser beam, wherein the interaction separates the laser beam in a first portion and a second portion. For example, the first portion is deflected in an intended manner and the second portion is not deflected in an intended manner. For example, the first portion is reflected by the optical element in a definable direction and the second portion is transmitted through the optical element. The second portion of the laser beam impinges onto the radiation sink of the optical device. In particular, the first portion of the laser beam has a higher optical power than the second portion of the laser beam. For example, the optical power of the first portion is at least ten times higher, preferably at least 100 times higher, than the optical power of the second portion.

According to one embodiment the optical device is arranged to deflect the first portion along a linear, circular, or random orbit. The optical device may be arranged to deflect the laser beam onto a workpiece. In particular, the first portion is deflected such that the point at which the laser beam impinges the workpiece is moved along a linear, circular, elliptical, or random path.

According to one embodiment, the laser machining device comprises a displacement device which is arranged to move the workpiece with respect to the optical device in a dedicated direction with a dedicated velocity. In particular, the displacement device is arranged to move the workpiece in a plane extending essentially perpendicularly to the extension direction of the first portion of the laser beam. In particular, the path of the point at which the first portion of the laser beam impinges onto the workpiece is defined by the relative motion of the workpiece with respect to the optical device and by the deflection of the first portion by means of the optical device.

According to one embodiment, the first portion of the laser beam is arranged to heat the workpiece, for cutting, welding, or imprinting the workpiece. For example, the material of the workpiece and/or the wavelength range of the laser beam are selected such that a major part of the first portion is absorbed by the material of the workpiece.

Further advantages and advantageous embodiments of the optical device and the laser machining device result from the following exemplary embodiments, which are presented in connection with the figures.
- Figure 1: shows an exemplary embodiment of the laser machining device in a side view;
- Figures 2 and 3: show exemplary embodiments of the optical device in a top view
- Figure 4: shows an exemplary embodiment of the optical device in a schematic perspective view,
- Figure 5: shows an exemplary embodiment of the optical device in a schematic sectional view,
- Figures 6 and 7: show an exemplary embodiment of the optical device in a schematic perspective view, and
- Figure 8: shows the exemplary embodiment of figure 7 in a schematic sectional view.

Identical, similar or elements having identical effects are provided with the same reference signs in the figures. The figures and the proportions of the elements represented in the figures to each other are not to be considered as true to scale. Rather, individual elements may be oversized for better representability and/or comprehensibility.

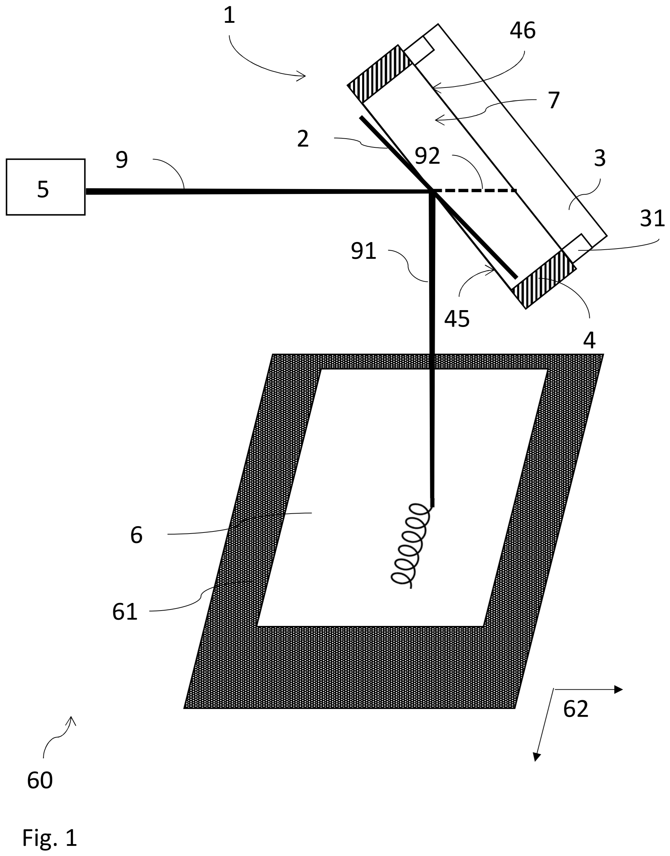

Figure 1 shows an exemplary embodiment of a laser machining device 60 in a schematic side view. The laser machining device 60 comprises an optical device 1 and a laser source 5. The laser source is arranged to emit a laser beam 9. The laser beam 9 has an optical power of at least 0.5 kW. The optical device 1 interacts with the laser beam 9, dividing the laser beam 9 in a first portion 91 and a second portion 92, wherein a first portion 91 of the laser beam 9 is deflected.

The optical device 1 comprises a carrier 4, an optical element 2 and a radiation sink 3. The optical element 2 is mounted on the carrier 4. The optical element 2 is movably attached to the carrier 4. By moving the optical element 2, the first portion 91 of the laser beam 9 is deflected in a definable direction. The carrier 4 has a recess, wherein the second portion 92 of the laser beam 9, which is transmitted through the optical element 2, is incident into the recess 7. The recess 7 extends completely through the carrier 4 from a first side 45 to a second side 46. The second portion 92 impinges onto the radiation sink 3. The first portion 91 of the laser beam 9 has a higher optical power than the second portion 92 of the laser beam. For example, the optical power of the first portion 91 is at least ten times higher than the optical power of the second portion 92.

The optical element 2 is a mirror, wherein the first portion 91 is reflected by the mirror and the second portion 92 is transmitted through the mirror. The mirror 2 is tiltable around a first rotational axis 21 and a second rotational axis 22. The direction in which the first portion 91 is reflected is definable by tilting the mirror.

The optical device 1 is arranged to deflect the first portion 91 along a circular orbit. Thus, the mirror performs a wobbling motion. The deflected first portion 91 impinges onto a workpiece. The point in which the first portion 91 impinges on the surface of the workpiece moves along a circular path if the workpiece 6 is not moved with respect to the optical device 1.

The workpiece 6 is arranged on a displacement device 61, which is arranged to move the workpiece 6 with respect to the optical device 1. In particular, the displacement device 61 is arranged to move the workpiece 6 in a definable direction with a definable velocity with respect to the optical device 1. The displacement device 61 is arranged to move the workpiece 6 along a displacement plane 62. The displacement plane 62 extends essentially perpendicularly with respect to an extension direction of the first portion 91. The displacement device 61 may be an X-Y-table.

The first portion 91 of the laser beam 9 is arranged to heat the workpiece 6, for cutting, welding, or imprinting the workpiece 6. In particular, the wavelength range of the laser beam 9 and the material properties of the workpiece 6 are selected such, that a particularly large portion of the first portion 91 is absorbed by the workpiece 6.

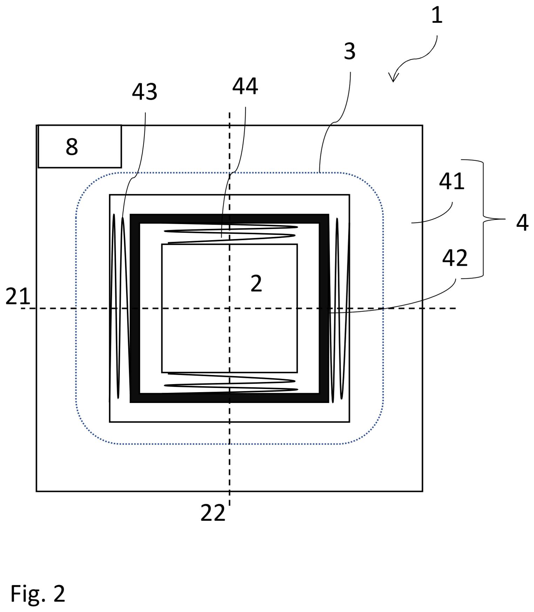

Figure 2 shows an exemplary embodiment of an optical device 1 in a schematic top view. The optical device comprises a mirror 2 which is coupled to the carrier 4. The optical device is arranged to deflect a laser beam 9 having an optical power of at least 0.5kW, in particular at least 10 kW. The carrier 4 comprises a gimbal bearing comprising an outer portion 41, an inner portion 42, an outer bearing 43 and an inner bearing 44. The outer portion 41 and the inner portion 42 have a frame-like geometry.

The outer bearing 43 couples the outer portion 41 and the inner portion 42. The inner bearing 44 couples the optical element 2 and the inner portion 42. The inner bearing 44 and the outer bearing 43 are springs, which are arranged to guide a tilt of the optical element 2. The outer bearing 43 provides a restoring force against the rotation of the optical element 2 around a first optical axis 21. The inner bearing 44 provides a restoring force against the rotation of the optical element 2 around a second optical axis 22. The first rotational axis 21 and the second rotational axis 22 extend along a reflective surface, in particular in the reflective surface, of the mirror 2. In particular, the optical element 2 is mirror-symmetrical with respect to the first rotational axis 21 and the second rotational axis 22.

The mass of the optical element 2, the mass of the inner portion 42 and the spring constant of the outer bearing 43 essentially define a first resonance frequency f1. The mass of the optical element 2 and the spring constant of the inner bearing 44 essentially define a second resonance frequency f2. The first resonance frequency f1 and the second resonance frequency f2 differ at most by 1Hz. In operation, the optical element 2 has a first amplitude a1 for a rotation around the first rotational axis 21 at the first resonance frequency f1 and a second amplitude a2 for a rotation around the second rotational axis a2 at the second resonance frequency f2. For example, the first amplitude a1 differs from the second amplitude a2 at most by 0.1°. The inner bearing 44 and the outer bearing 45 may be arranged such that the optical element 2 is rotatable around the first rotational axis 21 and the second rotational axis 22 by at least ± 0.05°, preferably by at least ± 0.1°.

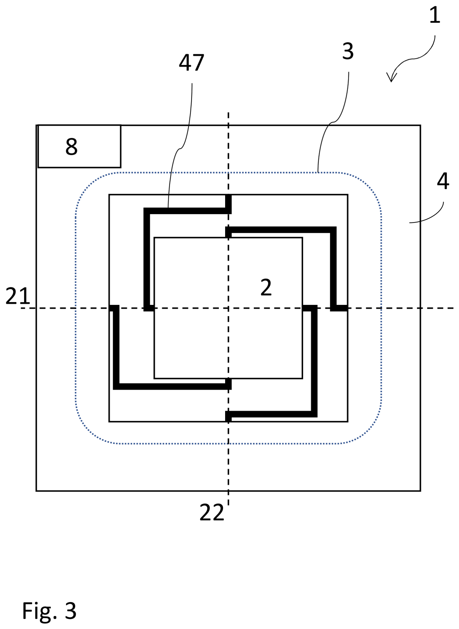

The optical device comprises a radiation sink 3 (represented by a dotted line) which is arranged behind the carrier 4 and the optical element 2 as seen in viewing direction of figure 3. As seen in a top view. The radiation sink 3 protrudes over the optical element 2 in all lateral directions.

The motion of the optical device 2 with respect to the carrier 4 is controlled by means of a driver 8. The driver 8 comprises at least one actuator, which is arranged to apply a force to tilt the optical element 2. The actuator may comprise a voice coil actuator, a piezo actuator, an electro-permanent-magnet-actuator, or a shape memory actuator. The driver 8 integrated in the carrier 4.

Figure 3 shows an exemplary embodiment of an optical device 1 in a schematic top view. The embodiment shown in figure 3 differs from the embodiment shown in figure 2 in the structure of the carrier 4 and in the bearing. The carrier 4 is a single continuous element. The carrier 4 is connected to the optical element 2 by means of the bearing 46. The bearing 46 comprises four leaf springs, which guide the tilt motion of the optical element 2 around the first optical axis 21 and the second optical axis 22. By opposing control of the actuators, a motion of the optical element 2 in a direction perpendicular to the surface of the mirror 2 is minimized. For example, multiple leaf springs, in particular all leaf springs, are fabricated in a one-piece manner.

The invention is not limited to the description based on the exemplary embodiments. Rather, the invention comprises each new feature as well as each combination of features, which in particular includes each combination of features in the claims, even if this feature or combination itself is not explicitly stated in the claims or examples.

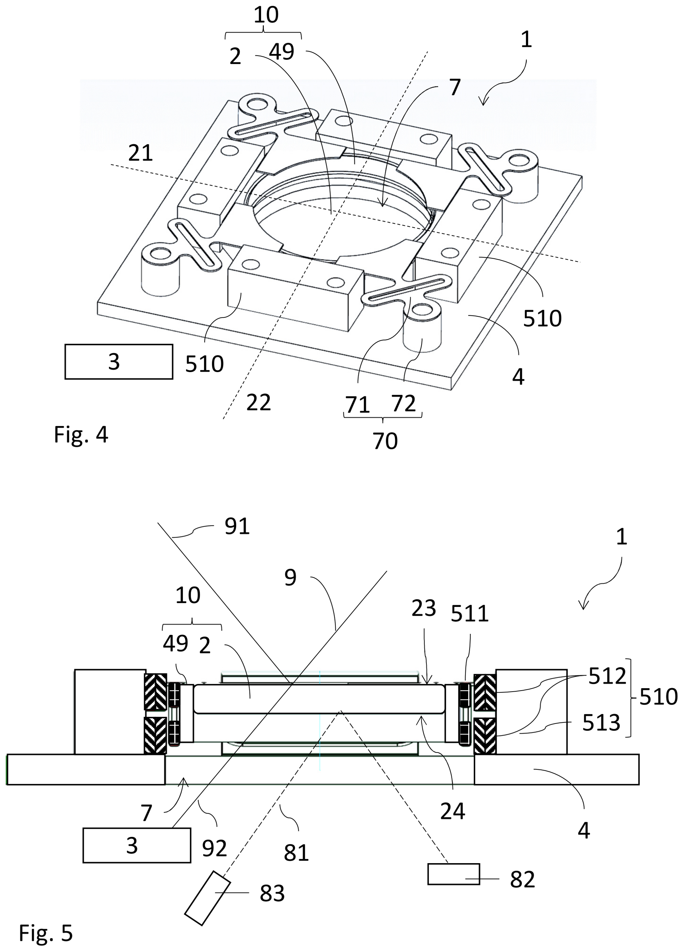

Figure 4 shows an exemplary embodiment of the optical device 1 in a schematic perspective view. The carrier 4 comprises a PCB, wherein the carrier 4 is the mechanically supporting structure of the optical device 1. Four magnets 510 are mounted on the carrier 4 around the opening 7. The opening 7 has a diameter of approximately 23.5 mm. The optical element 2 is circular and has a diameter of 25 mm and a thickness of 2.5 mm. A movable portion 10 is mounted on the carrier 4 by means of a bearing 70. The bearing 70 comprises four mounting posts 72 and four bending beams 71. The bending beams 71 essentially define the mechanical properties of the bearing 70. The bearing 70 bears the optical element 2, wherein the movable portion 10 is rotatable around the first 21 and the second 22 rotational axis. In particular, the first and second rotational axis extend perpendicular with respect to each other. Moreover, bearing may enable a translation of the movable portion 10 in a direction perpendicular with respect to the first 21 and second 22 rotational axis. The bearing has a particularly high stiffness for translation along the plane defined by the first rotational axis 21 and the second rotational axis 22.

Figure 5 shows an exemplary embodiment, in particular the embodiment shown in figure 4, of the optical device 1 in a schematic sectional view along the first rotational axis 21. The optical device 1 comprises a measurement unit 80 comprising an emitter 83, which emits a measurement beam 83. The measurement beam 81 impinges onto the optical element 2 on a second side which is opposed to a first side 23 of the optical element 2. The electromagnetic radiation 9 impinges onto the first side 23. The first 21 and the second 22 side both comprise dielectric mirrors, wherein the dielectric mirror on the first side 23 has a higher reflectivity for the electromagnetic radiation 9 which is divided in the first portion 91 and the second portion 92 than for the measurement beam 81. The dielectric mirror on the second side 24 has a higher reflectivity for the measurement beam 81 than for the electromagnetic radiation 9, in particular for the second portion 92. The measurement unit 80 is arranged to determine the position of the optical element by means of a detector 82, which is arranged to detect the location of the reflected measurement beam 81.

Coils 511 are fixedly attached on each side of the movable portion 10, in particular the chassis 49, facing the magnets 510. The coils 511 have a winding axis around which conductive tracks of the coil are wound, respectively. The winding axes extend along a plane, which is defined by the first and the second rotational axis. In particular, at least one coil comprises a winding axis extending along the first rotational axis 21 and at least one coil has winding axis extending along the second rotational axis 22.

The magnets 510 comprises two magnet portions 512 respectively, which are magnetized in an antiparallel fashion. The magnet portions 512 are arranged above one another in a direction perpendicular with respect to the first and second rotational axes. The magnet portions are magnetized in a direction along a plane defined by the first 21 and second 22 rotational axis. In particular, the magnet portions 512 are magnetized along the first rotational axis 21 or the second rotational axis 22. Depending on the direction of the current within the coil, the coil is attracted to and repelled from a magnet portion 512, which creates a momentum rotating the optical element 2 around the first rotational 21 axis or the second rotational axis 22 in a clockwise or counterclockwise direction. The magnet 510 comprises a return structure 510, which guides the magnetic field of two magnet portions 512, which are magnetized in an antiparallel fashion.

The coils 511 may be controlled in pairs so that coils 511 that cause a rotation around the same axis of rotation 21, 22 are controlled commonly. In particular, coils 511 causing a rotation around different axes of rotation 21, 22 may be controlled separately. The coils 511 may be electrically connected by means of the bearing 70. In particular, the bearing posts 72 and the bending beams 71 may be formed from an electrically conductive material, which is connected electrically to the coils 511.Figures 4 and 5 show an embodiment of the optical device 1, wherein the coils are fixedly attached to the moving portion 10 and the magnets 10 are fixedly attached to the carrier 4. Typically, the mass of the magnets is higher than the mass of coils, whereby this embodiment enables a lower mass being moved with the movable portion 10, which is particularly advantageous for fast movement of the movable portion 10. According to an alternative embodiment, the magnets 510 may be fixedly attached to the moving portion 10 and the coils 511 may be fixedly attached to the carrier4. Advantageously such embodiment simplifies the electrical connection of the coils and simplifies dissipating the heat generated within the coils during operation. According to a third alternative, some coils may be attached to the movable portion 10 and other coils may be attached to the carrier 4 and some magnets may be attached to the movable portion 10 and some magnets may be attached to the carrier 4. For example, coils causing a rotation around the first rotational axis 21 are attached to the movable portion 10 and coils 511 causing a rotation around the second rotational axis 22 are attached to the carrier 4 and magnets causing a rotation around the first rotational axis are attached to the carrier 4 and magnets causing a rotation around the second rotational axis are attached to the movable portion 10.

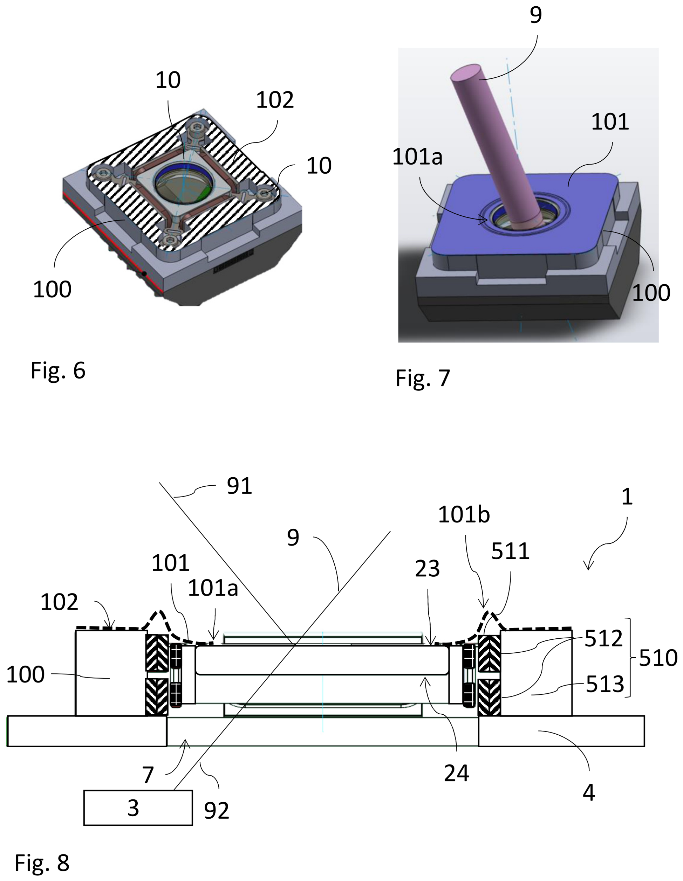

Figures 6 shows an exemplary embodiment of the optical device 1 in a schematic perspective view. The optical device 1 comprises a sealing structure 100 with a sealing surface 102. The sealing surface 102 is a flat surface, which surrounds the movable portion 10 and the bearing 70 as seen in a top view. In particular the sealing surface 102 is a continuous flat surface. The sealing structure may comprise the return structure 513. In other words, the sealing structure 100 comprises a recess in which the movable portion 10 and the bearing 70 are arranged.

Figure 7 shows an exemplary embodiment of the optical device in a schematic perspective view, wherein a sealing membrane 101 is arranged on the sealing surface 102. The sealing membrane 102 has an opening 101a. In the region of the opening 102a the sealing membrane is attached to the movable portion 10. Thus, the sealing membrane 102 forms continuous surface connecting the movable portion 10 and the carrier 4, in particular the outer portion 41. The sealing membrane 102 is arranged to form an airtight connection between the movable portion 10 and the carrier 4. In particular, the sealing member forms an airtight barrier between optical element 2 and the actuator 50 as well as between the optical element and the bearing 70. Typically, particles emerge from abrasion due to relative movement of adjacent structures. Thus, the actuator 50 and the bearing 70 bear a high risk of emerging particles. Advantageously, the sealing membrane 101 provides a physical separation between the structures which cause particles, namely the bearing and the actuator 50, and the structures which are particularly damageable by particles, namely the optical element 2. Thus, the sealing membrane 101 prevents deposition of particles on the optical element 2, which improves the optical quality and reduces the risk of failure of the optical device 1.

Figure 8 shows the exemplary embodiment of figure 7 in a schematic sectional view. The sealing membrane 101 may be adhesively connected to the sealing surface 102 and to the movable portion 10. In particular, the stiffness of the sealing membrane is lower than the stiffness of the bearing 70. For example, the stiffness of the sealing membrane is at least 10 times lower, preferably at least 100 times lower, highly preferred at least 1000 time lower, than the stiffness of the bearing 70. The sealing membrane 101 comprises a decoupling structure 101b, which is arranged to minimize forces which are transferred from the movable portion 10 to the sealing structure 100. The decoupling structure 101b may be formed by a portion of the sealing membrane 101 which has a particularly low stiffness. For example, the decoupling structure 101b is formed by a bulge of the sealing membrane 101. In particular, the decoupling structure 101b surrounds the opening 101a. In particular, the sealing membrane is free of the sealing structure 100 and free of the movable portion 10 in the region of the decoupling structure 101b.

In the embodiments shown in figures 4, 5 and 8 the coil 511 is fixedly attached to the moving portion and the magnet 510 is fixedly attached to the carrier. However, the coil 511 and the magnets 510 may be interchanged. Thus, the coil 511 may be attached to the carrier and the magnet 510 may be attached to the moving portion.

### List of reference signs

- 1: optical device
- 2: optical element
- 3: radiation sink
- 4: carrier
- 5: laser source
- 6: workpiece
- 7: recess
- 8: driver
- 9: laser beam
- 10: Movable portion
- 21: first rotational axis
- 22: second rotational axis
- 23: First surface
- 24: Second surface
- 31: thermally insulating material
- 41: outer portion
- 42: inner portion
- 43: outer bearing
- 44: inner bearing
- 45: first side of carrier
- 46: second side of carrier
- 47: bearing
- 48: axis element
- 49: chassis
- 50: actuator
- 51: Actuator portion
- 510: Magnet
- 511: Coil
- 512: Magnet portion
- 513: Return structure
- 60: laser machining device
- 61: displacement device
- 62: displacement plane
- 70: Bearing
- 71: Bending beam
- 80: Measurement unit
- 81: Measurement beam
- 82: detector
- 91: first portion of laserbeam
- 92: second portion of laser beam
- 100: Sealing structure
- 101: Sealing membrane
- 101a: Opening in sealing membrane
- 101b: Decoupling structure
- 102: Sealing surface
- f1: first frequency
- f2: second frequency
- a1: first amplitude
- a2: second amplitude

## Claims

1. Optical device (1) comprising a carrier (4), an optical element (2) and a radiation sink (3), wherein
- the optical element (2) is mounted on the carrier (4),
- the optical element (2) is movably attached to the carrier (4),
- the carrier (4) has a recess (7), wherein
- the optical device (1) is arranged to interact with electromagnetic radiation (9), dividing the electromagnetic radiation (9) in a first portion (91) and a second portion (92),
the optical element is arranged to deflect the first portion in a definable direction, and
the second portion (92) impinges onto the radiation sink (3).

2. Optical device (1) according to claim 1, wherein the optical element is a mirror that is fixedly attached to a chassis which is arranged to move with the mirror, wherein the mirror and the chassis form a movable portion of the optical device, which moves with respect to a fixed portion of the optical device, and a distance between a center of gravity of the movable portion and the first rotational axis (21) is not more than 0.5 mm and a distance between a center of gravity of the movable portion and the second rotational axis (22) is not more than 0.5 mm.

3. Optical device (1) according to the preceding claim, comprising a bearing which is arranged to bear the movable portion on the carrier (4), wherein
the bearing comprises at least two bending beams,
an actuator which is arranged to generate forces which effect the rotation around the first axis of rotation and the rotation around the second axis of rotation independently of one another,
wherein
- the actuator comprises a coil which is fixedly attached to the movable portion, and
- the bending beams comprise electrical contacts of the coil.

4. Optical device according to one of the claims 1 to 3, comprising an actuator which is arranged to generate forces which effect the rotation around the first axis of rotation and the rotation around the second axis of rotation independently of one another, wherein
- the actuator comprises a coil which is fixedly attached to the carrier, and
- the thermal resistance between the coil and the movable portion is higher than the thermal resistance between the coil and the carrier.

5. Optical device (1) according to one of the preceding claims, wherein the optical element (2) has a first resonance frequency (f1) for rotation around the first rotational axis and a second resonance frequency (f2) for rotation around the second rotational axis, wherein the first resonance frequency (f1) differs from the second resonance frequency (f2) by maximum 10 Hz, preferably 1 Hz.

6. Optical device according to the preceding claim, wherein the electromagnetic radiation (9) and the first portion (91) and/or the second portion (92) is/are incident into the recess (7).

7. Optical device (1) according to the preceding claim, wherein the recess (7) extends completely through the carrier (4) from a first side (45) to a second side (46), wherein the first side (45) is opposed to the second side (46).

8. Optical device according to one of the preceding claims, wherein the carrier (4) and the radiation sink (3) are connected by a thermally insulating material (31), wherein the thermal conductivity of the thermally insulating material (31) is lower than the thermal conductivity of the radiation sink (3).

9. Optical device (1) according to one of the preceding claims,
comprising a measurement unit (80) which is arranged to measure the deflection of the optical element (2), wherein
the measurement unit (80) is arranged to measure rotation of the optical element (2) around the first rotational axis (21) and rotation around the second rotational axis (22).

10. Optical device according to the preceding claim, wherein
the measurement unit (80) is arranged to generate a measurement beam (81) which impinges on the movable portion (10),
the movable portion (10) is arranged to reflect the measurement beam (81), and
the measurement unit (80) comprises a detector (82), wherein the detector (82) is arranged to detect the reflected measurement beam (81),
wherein a location at which the reflected measurement beam (81) impinges on the detector depends on the deflection of the optical element (2), and
the measurement unit (80) is arranged to determine the deflection of the optical element (2) from the location.

11. Optical device according to the preceding claim, wherein the measurement beam (81) impinges on a side of the optical element (2) which is opposed to the side on which the beam (9) impinges during intended operation.

12. Laser machining device (6) comprising the optical device (1) according to one of the preceding claims and a laser source (5), wherein
- the laser source (5) is arranged to emit a laser beam (9) having an energy of at least 0.5 KW
- the optical device (1) is arranged to interact with the laser beam (9), wherein
the interaction separates the laser beam in a first portion (91) and a second portion (91), the first portion (91) is deflected in a definable direction, and
- the first portion (91) of the laser beam (9) has a higher optical power than the second portion (92) of the laser beam (9).

13. Laser machining device (6) according to claim 12, wherein the optical device (1) is arranged to deflect the first portion (91) along a linear, circular or arbitrary orbit.

14. Laser machining device (6) according to claim 12 or 13comprising a displacement device (60) which is arranged to move the workpiece (6) and the optical device (1) with respect to each other in a definable direction (61) with a definable velocity.

15. Laser machining device (6) according to one of the proceeding claims, wherein the first portion (91) of the laser beam (9) is arranged to heat the workpiece (6), for cutting, welding, engraving or imprinting the workpiece (6).
